# EUROPEAN PATENT SPECIFICATION

(11) **EP 4 297 591 B1**
(45) Date of publication and mention of the grant of the patent: **14.05.2025**
(21) Application number: 22708171.8
(22) Date of filing: 01.03.2022
(51) Int. Cl.: A23N 15/02, A23N 15/06, B26D 7/18, B26D 1/00, B26D 1/45, B26D 1/58

(54) **TUBE-SHAPED KNIFE**
ROHRFÖRMIGES MESSER
COUTEAU EN FORME DE TUBE

(30) Priority: 19.04.2021 EP 21169210
(43) Date of publication of application: 03.01.2024
(73) Proprietor: PIP Innovations B.V., 5409 SX Odiliapeel (NL)
(72) Inventor: KROEF, Bart, 5854CZ Bergen (NL)
(74) Representative: CPW GmbH
(86) International application number: PCT/EP2022/055170
(87) International publication number: WO 2022/223186

(56) References cited:
- EP-A2- 2 898 997
- WO-A1-2019/049130
- JP-A- 2009 027 977
- US-A- 6 095 023
- US-A1- 2006 213 167
- US-A1- 2020 367 440

## Description

The invention pertains to a device for separating parts such as parts of a certain shape or size, stems, rotten spots or leaves, from fruits or vegetables comprising a tube-shaped knife and applications thereof

In many parts of Europe, strawberries are one of the most popular seasonal kinds of fruit which are - apart from the sale of whole strawberries - ingredients to a large amount of processed foods such as jams, yoghurt, different kinds of sweets and drinks. As availability of strawberries of good quality at least in European climates is strongly season dependent, strawberries are conserved by deep freezing in large amounts. Frozen strawberries are also important ingredients for different cocktails such as strawberry margaritas.

Typical processing and also raw consumption of whole strawberries starts with a cleaning step and removal of the stem and the leaves which are typically found on top of every strawberry which till today has at least to a certain extent be carried out by hand.

There are machine-assisted solutions available for removal of stems and leaves from strawberries, however these solutions still require proper positioning of the strawberries by hand which slows down the processing rate and leads to high costs for the corresponding staff which renders processing of strawberries inefficient in countries with high labor costs. Furthermore, machine-assisted destemming of strawberries requires the strawberries to be quite strictly sorted by size and shape. So far, completely automated methods for removal of the stems from strawberries which are competitive over handwork processing have not yet been found as said methods do not reach the yield of manual destemming. In automatic destemming the share of parts of strawberries that is removed without necessity is very large, reducing the yield of automated destemming techniques.

It is the object of the invention, to provide both the tooling and methodology for completely automatic removal of stems from strawberries at the same or better yield than in manual destemming without any restriction to shape and size of the strawberries.

From US 2020/367440 A1 a method and a corresponding device is known for separating strawberries from the stems when harvesting them, by means of a suction tube equipped with a cutting means. JP 2009 027977 A shows a device for cutting strawberries away from their stems while holding the strawberries with a suction tube.

The object of the invention has surprisingly been solved by method according to claim 1, and a device according to claim 7, both employing a tube comprising an inlet and an outlet, fixation means and/or handles for attachment to a tool such as a robot arm or for manual handling, a suction device connected to the outlet, whereby the inlet comprises a cutting edge.

According to the present application, a tube is an elongated, hollow body with at least one opening at each end which openings are connected by hollow space within the elongated, hollow body. One of said two holes is called the inlet of the tube and the other hole is called the outlet of the tube. The tube furthermore has an axis which is the imaginary line between the inlet and the outlet. The tube may be essentially straight which means that the axis of the tube may be a straight line. In an embodiment, the tube is made of metal such as iron, copper, bronze, brass or steel. The thickness of the material of the tube may depend on the purpose of use. In an embodiment, the maximum thickness of the material is 5 mm, 3 mm or 1 mm.

In an embodiment, the minimum thickness of the material may be 3 mm, 1 mm, 0.7 mm or 0.5 mm.

In an embodiment, the space within the tube between the inlet and the outlet is completely empty without any grids, sieves, stiffeners, stabilizers, longerons, stringers, rivets or screw heads.

The inner diameter of the tube may depend on the purpose of use. In an embodiment, the maximum inner diameter of the tube is 50 millimeters, 40 millimeters, 30 millimeters or 20 millimeters.

In an embodiment, the minimum inner diameter of the tube is 30 millimeters, 20 millimeters, 15 millimeters or 10 millimeters.

In an embodiment, the inner diameter of the tube is not constant over the whole length of the tube but varies between the inlet and the outlet. The inner diameter may increase from the inlet to the outlet giving the inside of the tube the shape of a truncated cone in case the tube is round. As suction is applied to the tube, the increase of the inner diameter from the inlet towards the outlet causes an increase of air flow speed between the inlet an the outlet with the highest air flow speed reached at the inlet. The inlet of the tube may thus work like a nozzle thus rendering suction of items into the inlet especially efficient. Furthermore, an increase in diameter between the inlet and the outlet lowers the risk of the tube being clogged by items being sucked into the inlet of the tube.

An important factor for the choice of the diameter of the tube is the size of items that may be sucked into the tube as well as the amount of pressure that is applied. Throughout this application, the term "diameter" is the largest extension of the tube that can be measured perpendicular to the axis of the tube. A similar effect is achieved by keeping the space within the tube completely hollow.

A cutting edge according to the pending application is an edge that due to its sharpness is able to cut a good to which it is brought in contact with. Typically, a cutting edge is an edge of a piece of metal or any other hard solid material such as glass or ceramics that has either artificially been sharpened or that is sharp by construction. A cutting edge according to the application may either be straight or bended. A cutting edge may form an open line or a closed structure such as a circle or an oval.

The cutting edge may be formed such that it forms a wedge which is able to not only cut into an item but also to push apart fragments of the cut item. The choice of the size of the angle of the wedge determines about the sharpness of the cutting edge on the one hand and about the intensity with which the fragments of the cutted item are pushed apart. The smaller the angle is the sharper is the cutting edge. The larger the wedge is the stronger the fragments of the cut item are pushed apart. Said two effects may thus be adjusted and adapted to the properties such as hardness of the good to be cut**.** In an embodiment, the angle of the wedge is about 20°. In an embodiment, the angle of the wedge is about 15°. In an embodiment the angle of the wedge is about 10°. Throughout the present application, the term "about" in front of a number means a range between the number minus two and the number plus two.

The cutting edge may either be a part of the tube or it may be connected to the tube. Thus, the cutting edge may be a separate member that is connected to the edge of the tube by glueing, welding, soldering or using a screwing or bayonette connector. The cutting edge may furthermore be obtained by sharpening the edge of the tube. The cutting edge is arranged perpendicularly to the axis of the tube which means that cutting by the cutting edge is carried out parallel to the axis of the tube.

In an embodiment, the tube with the cutting edge is moved along the axis of the tube only while cutting an item. Thus, during the cutting process, there is not any movement parallel or tangential to the cutting edge.

The suction device may be a vacuum chamber, a vacuum pump or a Venturi-nozzle passed by pressurized air. A Venturi nozzle is a nozzle wherein a tube comprises a reduction of thickness causing a flow of pressurized gas (e.g. air) to increase its flow speed and, at the same time, causes a suction perpendicular to the flow direction of the pressurized gas flow.

The cross section of the tube according to the application may have any shape. The cross section may be circular, elliptic, polygonal, star- or completely random shaped. The cross section of the tube may be of a decorative form such as in the form of a Christmas tree or an Easter egg.

The cutting edge may have any shape. The shape of the cutting edge may be circular, elliptic, polygonal, star- or completely random shaped. The cross section of the cutting edge may be of a decorative form such as in the form of a Christmas tree or an Easter egg. It is important to point out that the shape of the cutting edge does not necessarily have to be identical to the shape of the cross section of the tube. The cutting edge does furthermore not necessarily have to be perpendicular to the axis of the tube.

In an embodiment, at least a part of the cutting edge is smooth. In an embodiment, at least a part of the cutting edge comprises elevations and recessions such as spikes or a saw-tooth pattern. Elevations and recessions may be helpful if the tube is in contact with slippery goods.

In an embodiment, the means for fixation allow for rotating and/or tilting the tube in order to position the tube.

In an embodiment, the means for fixation forms a direct connection between the tube and a robot arm.

In an embodiment, between the means for fixation and the robot arm, there is positioned a mechanical damper. A mechanical damper according to the present application is any device that is able to damp mechanical impacts e.g. of the tube touching any means for counter pressure such as an item to be cut, an underlayment or a conveyor belt. A mechanical damper thus comprises a compressable member which requires force to be exerted for being compressed and which, in the compressed states exerts a resetting force such as a spring like a leaf spring or a spiral spring. The stiffness of the compressable member may be chosen depending on the hardness of the items to be cut.

In an embodiment, the connection between the tube and the suction device comprises a second outlet. Said second outlet may lead to a different target than the first outlet. The target of the second outlet may e.g. be a garbage bin, a conveyor belt or a storage container.

The second outlet may comprise a device to separate items that have been sucked into the tube from the flow such as a cyclone, a grid, a bag or a filter.

In case the suction device is a Venturi nozzle, an item sucked into the tube on one side can easily be transported away from the outlet of the suction part of the Venturi nozzle as a Venturi nozzle applies suction to one direction and pressure to another direction and can thus suck in an item on one side and blow it out on the other side.

The tube may be directly connected to the suction device. Connection between the tube and the suction device can also be through a further tube or a hose. In case a hose is used, the hose may be able to resist lower pressure either by its wall thickness or by reinforcement comprised in its wall. The hose and/or the further tube may be connected to both the tube and the suction device by a gas-tight connection.

In an embodiment, the diameter of the inlet is variable. The diameter of the inlet may be adjusted using e.g. a screw.

In an embodiment, the tube may comprise a second inlet. The second inlet may be installed between the inlet and the outlet and/or the second outlet and may serve as an emergency inlet in case the inlet is clogged in order to prevent damages caused by low pressure.

The second inlet may be equipped with a valve in order to make sure that it only opens if pressure falls below under a certain range and to keep the tube tight under regular use and to prevent noise which might be caused by the extra inlet. The application further pertains to a method for separating specific parts such as parts of a certain shape or size, stems, rotten spots or leaves, from fruits or vegetables such as strawberries, carrots, asparagus, potatoes, cucumbers or zucchinis or parts thereof comprising the steps of providing fruits or vegetables, providing a tube according to the application, applying a suction to the inlet of the tube, approaching the tube to the fruit or vegetable, using the cutting edge of the tube to cut the specific part from the fruit or vegetable such that the specific part is sucked into the inlet of the tube.

Throughout the remainder of this application, the fruits or vegetables from which parts are separated by the process according to the application are called "items to be cut". It is furthermore understood that the item to be cut according to the present application does not necessarily have to be fruit or vegetable but may also be any other piece of grocery such as meat, fish, any products made thereof, cheese or bakery products like bread or pastry. It is noted that the process according to the application also works for non-food articles without leaving the scope of the application.

A part according to the application may be any part of a fruit or vegetable that is selected to be separated for one or more certain criteria. The part may be separated from the fruit or vegetable as it is needed for either separate sale or further processing or it may be separated for disposal.

The tube may be approached to the fruit or vegetable by any possible means. It may be approached e.g. by hand or by a robot arm. Approach to the item to be cut may be conducted by optical observation e.g. by one or more cameras. In order to measure the distance to the fruit or vegetable, the tube and/or the robot arm may comprise a device for measuring a distance e.g. by ultrasound or laser. Approaching may occur right from the top or partly or completely from the side. After approaching, the tube may be put into the optimal position of cutting the item to be cut.

The item to be cut may be put into a position that is optimal for being cut.

Said to positioning steps may be combined in any manner known by the person skilled in the art.

After the positioning step or the positioning steps, the cut may be carried out using the cutting edge comprised in the tube. In an embodiment, the cutting process is carried out by a movement of the tube parallel to the axis of the tube only.

In an embodiment, the part that is cut from the item to be cut has a diameter that is substantially smaller than the diameter of the inlet of the tube.

During the cutting process, the connection between the item to be cut and the part may be completely cut through and the part such as a stem is completely separated from the item to be cut such as a strawberry.

In an embodiment, a cut is placed within the item to be cut essentially separating the part from the item to be cut with a small connection left. Said small connection may be ruptured as the wedge forming the cutting edge pushes the two fragments apart.

In an embodiment, the part is smaller than the remainder of the item to be cut.

As suction is applied to the outlet of the tube, an air flow is formed at the inlet of the tube which air flow may suck the separated part into the tube. The air flow may by its force also contribute to the separation of the part from the item to be cut by e.g. tearing through a connection between the item to be cut and the part that has, prior to suction, been weakened in the cutting step.

The strength of suction and thus the speed of air flow through the tube may be adapted to the estimated size and/or the estimated weight of the part that is sucked into the tube.

After sucking into the inlet of the tube, the separated part may be released from the tube through the outlet or the second outlet to a garbage bin, a container, a conveyor belt or another processing facility.

The items to be cut may be provided in a position or orientation wherein they are not suitable for cutting. Namely, the items to be cut may be provided in completely random orientation. The only requirement for the process according to the present application is that the items to be cut are properly separated which means that from an item to be cut, there is at least as much space to the next item to be cut in any direction as the largest outer diameter of the tube.

In order to provide the items to be cut with appropriate separation, several techniques may be used such as cascades of two or more conveyor belts running at increasing speed or cascades of conveyor belts of different width which are intersected in angles of lower than 180 degrees.

The items to be cut may thus be adjusted and/or positioned for cutting. Adjusting may be carried out e.g. by a special tool such as a grabber being fixed to a robot arm which adjusts the items to be cut before the tube approaches the fruit or vegetable. As an alternative, adjustment may be carried out by the tube itself such that the tube approaches the item to be cut, touches the item to be cut and then carries out a movement in order to bring the item to be cut in the right position for the cut before carrying out the cut. If done after adjustment, the cut can be carried out very precisely in order to make the separated part as small as possible. In case the part is an unwanted part such as a stem, leaves or a rotten spot, the separated part should be as small as possible such that all unwanted parts are removed but as much wanted parts as possible can be left on the item to be cut. Adjustment of the item to be cut prior to cutting may thus significantly increase the yield to the method.

It is possible that the part cannot be detected directly by optical inspection as it may be covered as e.g. the stem of strawberries which in some case is covered by leaves which are close to the fruit. Optical inspection would in such case detect the leaves e.g. by their color and place the cut underneath the leaves which may mean that a large part of the strawberry, which is covered by the leaves, is cut away. Thus optical detection may be combined with a computer-based method to predict the form of the fruit or vegetable, e.g. the strawberry, in order to precisely adjust the cut. Said computer-based method may be based on a geometric approximation of the contours of the fruit or vegetable or on machine learning or deep learning techniques using e.g. neural networks.

The application further pertains to a device for carrying out the method according to the application comprising at least one tube according to the application, at least one suction device, at least one Delta robot, at least one computer, at least one conveyor belt and at least one optical detection device.

### Figures

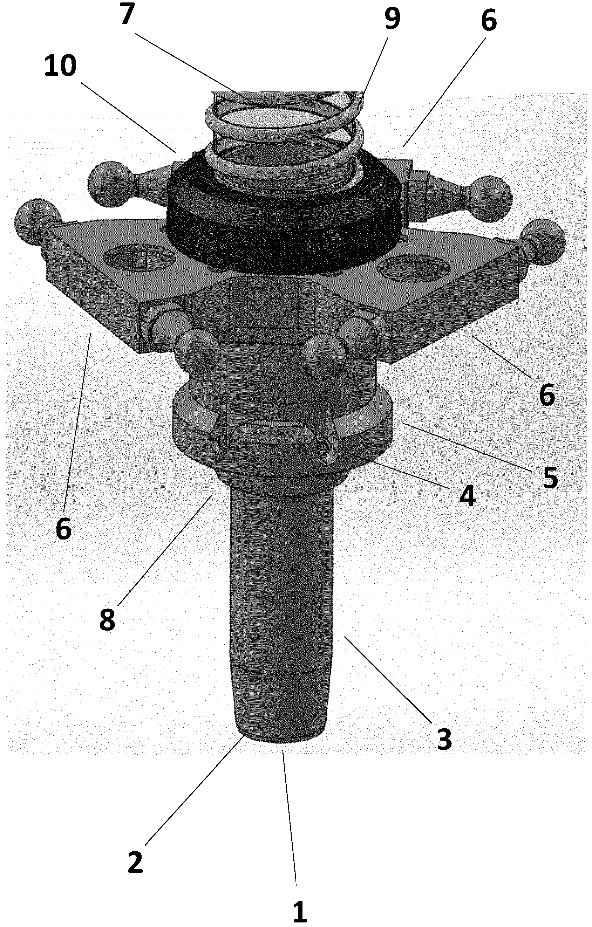

**Fig. 1** shows an embodiment of the tube-shaped knife according to the application. It is understood that Fig. 1 is not limiting the scope of the application. The tube-shaped knife comprises a tube **3,** a cutting edge **2,** an inlet **1** and an outlet **8.** By a bayonette mount **4,** the outlet **8** of the tube **3** is fixed to a connector **5.** Said connector **5** comprises three connection means **6** which can take the arms of a Delta robot (not shown). Furthermore, a vacuum hose **7** is connected to the connector. The vacuum hose **7** is reinforced by a helix **9.** The vacuum hose is fixed to the connector by a hose clamp **10.**

## Claims

1. **A method** for separating parts such as parts of a certain shape or size, stems, rotten spots or leaves, from fruits or vegetables such as strawberries, carrots, asparagus, potatoes, cucumbers or zucchinis or parts thereof comprising the steps of
- providing fruits or vegetables on a conveyor belt,
- providing a tube (3) with a diameter and an axis, the tube comprising
∘ an inlet (1),
∘ an outlet (8),
∘ a cutting edge (2) located at the inlet,
∘ a suction device connected to the outlet,
- applying a suction to the inlet of the tube,
- cutting the part from the fruit or vegetable with the cutting edge and sucking the part into the inlet of the tube.

2. The method of claim 1 wherein the fruits or vegetables are provided in random orientation, preferably with a distance to the next fruit or vegetable of at least the diameter of the tube in all directions.

3. The method of any one or more of the previous claims wherein the fruits or vegetables are adjusted, preferably by tilting, by the tube prior to carrying out the cut.

4. The method of any one or more of the previous claims wherein the part is released through the outlet of the tube

5. The method of any one or more of the previous claims wherein the shape of the fruit or vegetable is predicted by a computer-based method before the tube approaches the fruit or vegetable.

6. The method of any one or more of the previous claims wherein the cutting is carried out in a movement parallel to the axis of the tube.

7. A device for carrying out the method of any one or more of claims 1 to 6 comprising
- at least one suction device,
- at least one tube (3) with an inner diameter and an axis, the tube comprising, an inlet (1),the inlet comprising a cutting edge (2) perpendicular to the axis of the tube, the tube further comprising an outlet (8) connectable to the suction device,
- at least one Delta robot,
- at least one computer,
- at least one conveyor belt and
- at least one optical detection device.

8. A device according to claim 7 wherein the suction device is a vacuum chamber or a vacuum pump or a venturi jet driven by pressurized air.

9. The device of claim 7 or 8, wherein the inner diameter of the tube increases from the inlet to the outlet.

10. The device of any one or more of claims 7 to 9, wherein the cutting edge has the form of a polygon, an ellipse or a circle.

11. The device of any one or more of claims 7 to 10, wherein at least parts of the cutting edge are smooth.

12. The device of any one or more of claims 7 to 11, wherein at least parts of the cutting edge have a saw-tooth-pattern.

13. The device of any one or more of claims 7 to 12, wherein the connection between the tube and the suction device comprises a second outlet.

14. The device of any one or more of claims 7 to 13 wherein the tube comprises the fixation means allows for rotating and/or tilting the tube.

15. The device of any one or more of claims 7 to 14, wherein the diameter of the inlet is variable.

16. The device of any one or more of claims 7 to 15, wherein the tube comprises a second inlet, preferably closed by a valve.

## Patentansprüche

1. Verfahren zum Abtrennen von Teilen, wie beispielsweise Teilen einer bestimmten Form oder Größe, Stielen, faulen Stellen oder Blättern, von Obst oder Gemüse wie Erdbeeren, Karotten, Spargel, Kartoffeln, Gurken oder Zucchini oder Teilen davon, umfassend die Schritte zum
- Bereitstellen von Obst oder Gemüse auf einem Förderband,
- Bereitstellen eines Rohres (3) mit einem Durchmesser und einer Achse, wobei das Rohr umfasst
- einen Einlass (1),
- einen Auslass (8),
- eine Schneidkante (2), die sich am Einlass befindet,
- eine mit dem Auslass verbundene Saugvorrichtung,
- Anlegen einer Saugwirkung an den Einlass des Rohres,
- Abschneiden des Teils von dem Obst oder Gemüse mit der Schneidkante und Saugen des Teils in den Einlass des Rohres.

2. Verfahren nach Anspruch 1, wobei das Obst oder Gemüse in zufälliger Ausrichtung, bevorzugt mit einem Abstand zu dem nächsten Obst oder Gemüse von mindestens dem Durchmesser des Rohres in allen Richtungen bereitgestellt wird.

3. Verfahren nach einem oder mehreren der vorstehenden Ansprüche, wobei das Obst oder Gemüse vor dem Ausführen des Schneidens durch das Rohr, bevorzugt durch Neigen, ausgerichtet wird.

4. Verfahren nach einem oder mehreren der vorstehenden Ansprüche, wobei der Teil durch den Auslass des Rohres abgegeben wird.

5. Verfahren nach einem oder mehreren der vorstehenden Ansprüche, wobei die Form des Obstes oder Gemüses durch ein computergestütztes Verfahren vorhergesagt wird, bevor sich das Rohr dem Obst oder Gemüse nähert.

6. Verfahren nach einem oder mehreren der vorstehenden Ansprüche, wobei das Schneiden in einer Bewegung parallel zur Achse des Rohres durchgeführt wird.

7. Vorrichtung zum Ausführen des Verfahrens nach einem der Ansprüche 1 bis 6, umfassend
- mindestens eine Saugvorrichtung,
- mindestens ein Rohr (3) mit einem Innendurchmesser und einer Achse, wobei das Rohr einen Einlass (1) umfasst, wobei der Einlass eine Schneidkante (2) senkrecht zu der Achse des Rohres umfasst, wobei das Rohr weiter einen Auslass (8) umfasst, der mit der Saugvorrichtung verbindbar ist,
- mindestens einen Delta-Roboter,
- mindestens einen Computer,
- mindestens ein Förderband und
- mindestens eine optische Detektionsvorrichtung.

8. Vorrichtung nach Anspruch 7, wobei die Saugvorrichtung eine Vakuumkammer oder eine Vakuumpumpe oder eine durch Druckluft angetriebene Venturidüse ist.

9. Vorrichtung nach Anspruch 7 oder 8, wobei der Innendurchmesser des Rohrs vom Einlass zum Auslass zunimmt.

10. Vorrichtung nach einem oder mehreren der Ansprüche 7 bis 9, wobei die Schneidkante die Form eines Polygons, einer Ellipse oder eines Kreises aufweist.

11. Vorrichtung nach einem oder mehreren der Ansprüche 7 bis 10, wobei zumindest Teile der Schneidkante glatt sind.

12. Vorrichtung nach einem oder mehreren der Ansprüche 7 bis 11, wobei zumindest Teile der Schneidkante ein Sägezahnmuster aufweisen.

13. Vorrichtung nach einem oder mehreren der Ansprüche 7 bis 12, wobei die Verbindung zwischen dem Rohr und der Saugvorrichtung einen zweiten Auslass umfasst.

14. Vorrichtung nach einem oder mehreren der Ansprüche 7 bis 13, wobei das Rohr Befestigungsmittel umfasst, die ein Drehen und/oder Neigen des Rohrs ermöglichen.

15. Vorrichtung nach einem oder mehreren der Ansprüche 7 bis 14, wobei der Durchmesser des Einlasses variabel ist.

16. Vorrichtung nach einem oder mehreren der Ansprüche 7 bis 15, wobei das Rohr einen zweiten Einlass, der bevorzugt durch ein Ventil verschlossen ist, umfasst.

## Revendications

1. Procédé de séparation de parties telles que des parties d'une certaine forme ou taille, des tiges, des taches pourries ou des feuilles, de fruits ou légumes tels que des fraises, des carottes, des asperges, des pommes de terre, des concombres ou des courgettes ou de parties de ceux-ci, comprenant les étapes consistant à
- fournir des fruits ou légumes sur une bande transporteuse,
- fournir un tube (3) avec un diamètre et un axe, le tube comprenant
- une entrée (1),
- une sortie (8),
- une arête de coupe (2) située au niveau de l'entrée,
- un dispositif d'aspiration relié à la sortie,
- appliquer une aspiration à l'entrée du tube,
- couper la partie du fruit ou légume avec l'arête de coupe et aspirer la partie dans l'entrée du tube.

2. Procédé selon la revendication 1, dans lequel les fruits ou légumes sont fournis selon une orientation aléatoire, de préférence avec une distance par rapport au fruit ou légume suivant d'au moins le diamètre du tube dans toutes les directions.

3. Procédé selon l'une ou plusieurs quelconques des revendications précédentes, dans lequel les fruits ou légumes sont ajustés, de préférence par inclinaison, par le tube avant d'effectuer la coupe.

4. Procédé selon l'une quelconque des une ou plusieurs quelconques des revendications précédentes, dans lequel la partie est libérée par la sortie du tube.

5. Procédé selon l'une ou plusieurs quelconques des une ou plusieurs quelconques des revendications précédentes, dans lequel la forme du fruit ou légume est prédite par un procédé informatique avant que le tube ne s'approche du fruit ou légume.

6. Procédé selon l'une ou plusieurs quelconques des une ou plusieurs quelconques des revendications précédentes, dans lequel la coupe est effectuée dans un mouvement parallèle à l'axe du tube.

7. Dispositif pour effectuer le procédé selon l'une ou plusieurs quelconques des revendications 1 à 6 comprenant
- au moins un dispositif d'aspiration,
- au moins un tube (3) avec un diamètre intérieur et un axe, le tube comprenant une entrée (1), l'entrée comprenant une arête de coupe (2) perpendiculaire à l'axe du tube, le tube comprenant en outre une sortie (8) raccordable au dispositif d'aspiration,
- au moins un robot Delta,
- au moins un ordinateur,
- au moins une bande transporteuse et
- au moins un dispositif de détection optique.

8. Dispositif selon la revendication 7, dans lequel le dispositif d'aspiration est une chambre à vide ou une pompe à vide ou un jet Venturi entraîné par de l'air sous pression.

9. Dispositif selon la revendication 7 ou 8, dans lequel le diamètre intérieur du tube augmente de l'entrée à la sortie.

10. Dispositif selon l'une ou plusieurs quelconques des revendications 7 à 9, dans lequel l'arête de coupe présente la forme d'un polygone, d'une ellipse ou d'un cercle.

11. Dispositif selon l'une ou plusieurs quelconques des revendications 7 à 10, dans lequel au moins des parties de l'arête de coupe sont lisses.

12. Dispositif selon l'une ou plusieurs quelconques des revendications 7 à 11, dans lequel au moins des parties de l'arête de coupe présentent un motif en dents de scie.

13. Dispositif selon l'une ou plusieurs quelconques des revendications 7 à 12, dans lequel le raccordement entre le tube et le dispositif d'aspiration comprend une seconde sortie.

14. Dispositif selon l'une ou plusieurs quelconques des revendications 7 à 13, dans lequel le tube comprend les moyens de fixation permettant la rotation et/ou l'inclinaison du tube.

15. Dispositif selon l'une ou plusieurs quelconques des revendications 7 à 14, dans lequel le diamètre de l'entrée est variable.

16. Dispositif selon l'une ou plusieurs quelconques des revendications 7 à 15, dans lequel le tube comprend une seconde entrée, de préférence fermée par une valve.
